(19) Europäisches Patentamt
European Patent Office
Office européen des brevets

(11) **EP 4 748 677 A1**

(12) **DEMANDE DE BREVET EUROPEEN**

(43) Date de publication:
27.05.2026 Bulletin 2026/22

(21) Numéro de dépôt: 25217798.5

(22) Date de dépôt: 21.11.2025

(51) Classification Internationale des Brevets (IPC):
**B60W 50/02** (2012.01)     **B60W 50/04** (2006.01)
**G06F 11/30** (2006.01)

(52) Classification Coopérative des Brevets (CPC):
**B60W 50/045; G06F 11/3013; G06F 11/3024;
G06F 11/3055;** B60W 2050/0006; B60W 2050/021

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **22.11.2024 FR 2412857**

(71) Demandeur: **AMPERE s.a.s.
92100 Boulougne-Billancourt (FR)**

(72) Inventeurs:
• **CONEJO, Carlos
08019 Barcelone (ES)**
• **MILANES, Vicente
47010 Valladolid (ES)**
• **MORCEGO, Bernardo
08222 Terrassa (ES)**
• **NAVAS, Francisco-Martin
28002 MADRID (ES)**
• **PUIG, Vicenc
08221 Terrassa (ES)**

(74) Mandataire: **Renault Group
Renault s.a.s.
1 avenue du Golf
FR TCR AVA 055
78084 Guyancourt Cedex (FR)**

(54) **SYSTÈME DE GESTION D'UN VÉHICULE AUTONOME**

(57) La présente invention concerne un système de gestion (1) pour véhicule autonome, comprenant :
- au moins une unité centrale (2) comprenant une pluralité de modules de gestion (4) d'une caractéristique liée au véhicule autonome, chaque module de gestion (4) étant apte à traiter des mesures ou données pour générer une instruction de commande à destination d'actionneurs (8) et/ou pour générer une donnée à destination d'au moins un autre module de gestion,
- au moins une unité de sécurité (3) comprenant une pluralité de modules de sécurité (5), chacun étant spécifiquement lié à l'un des modules de gestion (4) de l'unité centrale (2) et étant configuré pour détecter une anomalie du module de gestion (4) correspondant, ainsi qu'un module d'arrêt d'urgence (6) assurant l'arrêt d'urgence du véhicule en cas d'anomalie détectée.

L'invention couvre également un procédé de gestion mis en œuvre par un tel système de gestion (1).

[Fig. 1]

EP 4 748 677 A1

**Description**

La présente invention se rapporte au domaine des véhicules autonomes, et concerne plus particulièrement un système de gestion pour de tels véhicules autonomes.

Les véhicules autonomes sont conçus pour fonctionner dans des environnements et dans des conditions spécifiques. Ils sont régulièrement confrontés à des situations spécifiques en raison des variables de l'environnement dans lequel ils évoluent et du type de capteurs/actionneurs qu'ils utilisent, et doivent répondre à ces situations de la manière la plus efficace et sécurisée possible. Les véhicules autonomes doivent ainsi être équipés de capteurs aptes à détecter des caractéristiques indispensables pour pouvoir fonctionner de manière autonome, de systèmes de gestion configurés pour d'une part récupérer, via ces capteurs notamment, des données précises sur des paramètres comme, par exemple, la perception de l'environnement extérieur ou la géolocalisation, afin de générer des instructions, et pour d'autre part générer, en fonction de ces données, des instructions de commande à destination d'actionneurs assurant la mise en œuvre des fonctions de roulage du véhicule notamment.

Les véhicules autonomes doivent être aptes à effectuer plus ou moins d'actions sans l'intervention d'un conducteur, en fonction de leur degré d'autonomie. On comprend que plus le degré d'autonomie est élevé et plus les normes de sécurité sont élevées.

Il est ainsi connu d'avoir, au sein du système de gestion, des moyens de vérification de l'instruction envoyée à un actionneur afin qu'en cas d'anomalie détectée, le véhicule autonome puisse adapter son fonctionnement à ladite anomalie, en agissant sur les actionneurs du véhicule, soit via une correction soit via un arrêt d'urgence selon la gravité de l'anomalie.

Les systèmes de gestion actuels sont toutefois configurés de manière à détecter des anomalies dans l'instruction de commande finale envoyée à l'actionneur par le système de gestion, cette instruction de commande pouvant résulter de la compilation de plusieurs données détectées par différents capteurs. De fait, les systèmes de gestion actuels sont configurés pour agir de la même manière, et notamment réaliser un arrêt d'urgence sécuritaire, peu importe la source de l'anomalie. Les véhicules autonomes peuvent ainsi ne pas répondre de manière optimale à une anomalie intervenant spécifiquement au niveau d'une caractéristique particulière du véhicule autonome ou de son environnement.

La présente invention s'inscrit dans ce contexte et propose à ce titre un système de gestion pour véhicule autonome, comprenant :

- au moins une unité centrale comprenant une pluralité de modules de gestion d'une caractéristique liée au véhicule autonome, chaque module de gestion étant apte à traiter des mesures en provenance de moyens de détection, et/ou à traiter une donnée en provenance d'au moins un autre module de gestion, pour générer une instruction de commande à destination d'actionneurs et/ou pour générer une donnée à destination d'au moins un autre module de gestion,
- au moins une unité de sécurité comprenant une pluralité de modules de sécurité, chacun étant spécifiquement lié à l'un des modules de gestion de l'unité centrale et étant configuré pour détecter une anomalie du module de gestion correspondant, ainsi qu'un module d'arrêt d'urgence assurant l'arrêt d'urgence du véhicule en cas d'anomalie détectée.

Autrement dit, toutes les opérations de contrôle de sécurité sont décentralisées et réalisées dans une unité distincte de l'unité centrale et elles peuvent ainsi avantageusement être divisées en plusieurs opérations de contrôle, chaque opération de contrôle étant propre à un paramètre mis en œuvre spécifiquement par un module de gestion, chaque opération de contrôle étant effectuée par un des modules de sécurité qui est lié audit module de gestion. Chaque module de sécurité n'agit que sur le contrôle du paramètre traité par le module de gestion auquel il est associé. Ceci permet d'une part de répondre aux potentielles anomalies de manière plus spécifique et adaptée, et d'autre part de pouvoir intégrer de nouvelles fonctions de manière simplifiée, sans avoir à effectuer des modifications complexes du système de sécurité puisqu'il convient d'ajouter un module de sécurité indépendant des autres modules de sécurité déjà en place.

L'unité centrale est apte à agir sur le véhicule en fonction des instructions de commande générées par l'un et/ou l'autre de ses modules de gestion. L'unité centrale reçoit en continu des mesures des moyens de détection, lesquels pouvant être des capteurs embarqués sur le véhicule. Les mesures sont par la suite traitées par les modules de gestion pour générer une instruction de commande à destination d'un ou plusieurs actionneurs. Chacun d'entre eux reçoit les mesures qui lui sont spécifiques, sachant que certaines mesures peuvent être utiles et ainsi envoyées à plusieurs modules. De manière additionnelle, les modules de gestion sont aptes à générer une donnée à destination d'un module de gestion de rang supérieur, sur la base des informations reçues qui peuvent tout aussi bien être une mesure acquise par un capteur du véhicule qu'une donnée précédemment générée par un module de gestion inférieur.

En cela, on peut considérer le système de gestion selon l'invention comme un système hiérarchique, dans lequel un module de gestion de rang intermédiaire peut recevoir une donnée en provenance d'un module de gestion de rang inférieur et se servir de cette donnée, et le cas échéant d'autres paramètres acquis par des capteurs appropriés, pour générer une nouvelle donnée à destination d'un module de gestion de rang supérieur.

En d'autres termes, les modules de gestion sont configurés pour fonctionner en cascade, et selon l'invention, l'unité de sécurité est configurée pour qu'un module de sécurité puisse intervenir à chacun de ces étages de fonctionnement successifs.

L'unité centrale, et notamment via le module de gestion de rang le plus élevé, est configurée pour générer une instruction de commande globale à destination des actionneurs, prenant en compte les différentes données générées successivement de proche en proche par chacun des modules de gestion. A titre d'exemples, les actionneurs peuvent être l'accélérateur, les freins ou le volant. Les actionneurs sont alors mis en œuvre pour répondre efficacement à cette ou ces instructions de commande.

Selon différents exemples non exhaustifs, les modules de gestion peuvent être dédiés à la localisation du véhicule, à la perception de l'environnement, à la navigation du véhicule ou au contrôle du véhicule.

L'unité de sécurité comprend un module de sécurité pour chacun des modules de gestion correspondant ainsi que le module d'arrêt d'urgence. Un module de sécurité spécifiquement lié à un module de gestion signifie qu'un module de gestion et un module de sécurité sont liés uniquement l'un à l'autre, formant des paires de modules, chaque paire étant relatif à une caractéristique liée au véhicule autonome.

Il résulte de ce qui précède que l'unité de sécurité comprend un module supplémentaire par rapport à l'unité centrale, qui est le module d'arrêt d'urgence. Les modules de sécurité sont configurés pour générer, en fonction de l'opération de contrôle du bon fonctionnement du module de gestion qui leur est associé, une alerte à destination de ce module d'arrêt d'urgence, qui est à même d'agir directement sur les actionneurs pour un arrêt d'urgence notamment si la situation est jugée critique.

Lorsqu'une nouvelle fonction doit être ajoutée au système de gestion prévu dans les versions précédentes du véhicule autonome, il est ainsi plus aisé de l'intégrer au système de gestion. S'il convient d'ajouter un module de gestion dans l'unité centrale et de paramétrer ladite unité centrale pour que l'instruction de commande globale à envoyer aux actionneurs tienne compte de la présence, dans la chaîne de données transmis de module de gestion en module de gestion, de la donnée générée par le nouveau module de gestion, la modification de l'unité de sécurité est simplifiée dans la mesure où il suffit d'ajouter un module de sécurité correspondant, indépendant des autres modules de sécurité.

Selon une caractéristique de l'invention, chaque module de sécurité est configuré pour recevoir les mesures et/ou les données reçues par le module de gestion correspondant. Alors que l'unité centrale, par le biais de ses modules de gestion, utilise les mesures transmises par les moyens de détection pour générer une instruction de commande à un ou plusieurs actionneurs associés à une fonction donnée, l'unité de sécurité est configuré pour traiter, pour chaque module de gestion faisant partie de cette unité de sécurité, les mesures transmises par les moyens de détection et/ou les données reçues en provenance d'un module de gestion de rang inférieur, uniquement pour vérifier dans un cas si les moyens de détection correspondants sont en bon état de fonctionnement et si les mesures effectuées sont suffisamment fiables et dans l'autre cas si les données transmises par le ou les modules de gestion de rang inférieur dans la chaîne de modules de gestion sont suffisamment fiables, pour que l'instruction de commande générée par l'unité centrale puisse être considérée.

Selon une caractéristique de l'invention, chaque module de sécurité est configuré pour recevoir les instructions de commande et/ou les données générées par le module de gestion correspondant. De telles instructions de commandes et/ou données sont générées par les modules de gestion en fonction des mesures et/ou des données reçues préalablement et selon l'invention, il appartient au module de sécurité associé à un module de gestion de vérifier si l'instruction de commande et/ou la donnée générée par ledit module de gestion est correcte. A cet effet, les instructions de commande et/ou les données sont transmises des modules de gestion aux modules de sécurité correspondants.

Autrement dit, une double vérification est effectuée par le module de sécurité associé à un module de gestion afin d'opérer une vérification en amont, via les moyens de détection directement et les données reçues, et en aval, via les instructions de commande et/ou les données générées par son module de gestion correspondant. Cela améliore aussi la capacité de détection d'une potentielle anomalie et cela permet de localiser, dans le système hiérarchique avec des modules de gestion qui sont de rangs différents, cette anomalie. Le système de gestion selon l'invention, en plus d'être simplifié, est également plus efficace.

Selon une caractéristique de l'invention, le module d'arrêt d'urgence est configuré pour communiquer avec chacun des modules de sécurité. C'est le module d'arrêt d'urgence qui assure l'intermédiaire entre les modules de sécurité pouvant détecter une potentielle anomalie et les actionneurs. Le module d'arrêt d'urgence est configuré pour compiler les alertes de sécurité qui peuvent lui être envoyées par chacun des modules de sécurité, et pour en tirer une décision d'arrêt d'urgence ou non en fonction de la gravité des alertes de sécurité.

L'invention couvre également un procédé de gestion d'un véhicule autonome, mis en œuvre par un système de gestion tel que décrit précédemment, comprenant :

- une étape de mesure d'au moins un paramètre par les moyens de détection et/ou une étape de génération d'au moins une donnée par un module de gestion de rang n-1 de l'unité centrale,
- une étape de transmission des mesures et/ou des données générées par ledit module de gestion à un module de

**EP 4 748 677 A1**

gestion de rang n de l'unité centrale et au module de sécurité de l'unité de sécurité qui est associé au module de gestion de rang n,

- une étape de génération par le module de gestion de rang n de l'unité centrale d'instructions de commande à destination d'actionneurs et/ou de données à destination d'au moins un module de gestion de rang n+1 par le module de gestion de l'unité centrale à partir de la mesure d'au moins un paramètre et/ou de le l'au moins une donnée transmise,
- une étape de transmission des instructions de commande et/ou des données générées par le module de gestion de rang n de l'unité centrale à destination du module de sécurité de l'unité de sécurité associé au module de gestion de rang n,
- une étape de comparaison, par le module de sécurité de l'unité de sécurité, des mesures et/ou des données transmises au module de gestion de rang n par les moyens de détection, et/ou des instructions de commande et/ou des données générées par le module de gestion de rang n de l'unité centrale, à une valeur seuil,
- une étape d'arrêt d'urgence par le module d'arrêt d'urgence en fonction du résultat de l'étape de comparaison.

Un tel procédé se déroule et est réitéré en continu pour surveiller le véhicule autonome, prévenir toute anomalie pouvant survenir au cours d'un trajet du véhicule autonome, et opérer un arrêt d'urgence du véhicule en cas d'anomalie détectée. Les moyens de détection effectuent des mesures pouvant être analysées par un ou plusieurs modules de gestion et/ou un ou plusieurs modules de sécurité. Tel que cela a été mentionné, les moyens de détection peuvent être des capteurs.

Lorsque les mesures sont transmises, celles-ci sont envoyées de manière identique à l'un des modules de gestion et à son module de sécurité correspondant, chacun des modules de sécurité étant spécifiquement lié à l'un des modules de gestion. Une même mesure peut être transmise à plusieurs modules de gestion et plusieurs modules de sécurité si ladite mesure est pertinente pour différentes caractéristiques liées au véhicule autonome. De manière analogue, dans le système hiérarchique, lorsque les données générées par un module de gestion de rang n sont transmises, celles-ci sont envoyées de manière identique d'une part au module de rang n+1, afin que celui-ci puisse utiliser la donnée pour générer une autre donnée plus large ou une instruction de commande à des actionneurs, et d'autre part à un module de sécurité associé au module de rang n.

Les modules de gestion sont aptes à réceptionner les mesures et/ou les données d'un module de gestion de rang inférieur, à les analyser et à générer des instructions de commande à destination des actionneurs et/ou des données à destination d'un module de gestion de rang supérieur, ces instructions de commande et/ou ces données étant par ailleurs transmises aux modules de sécurité correspondants. Comme cela a été dit précédemment, chaque module de sécurité de l'unité de sécurité est configuré pour détecter un premier type d'anomalie structurelle, par exemple en se basant sur l'analyse des mesures transmises par les moyens de détection, et un deuxième type d'anomalie logicielle, par exemple en se basant sur l'analyse des instructions de commande transmises par le module de gestion de l'unité centrale qui est associé à ce module de sécurité. Chaque module de sécurité de l'unité de sécurité est ainsi apte à contrôler la véracité des informations reçues par le module de gestion correspondant, dans un niveau de contrôle de type structurel, et à contrôler la justesse de l'instruction de commande réalisée par le module de gestion correspondant, dans un niveau de contrôle de type logiciel.

L'étape de comparaison permet de détecter les anomalies. Pour chaque mesure ou instructions, la valeur seuil est mise en place pour déterminer une limite à partir de laquelle la situation à laquelle est liée ladite mesure, ladite donnée ou ladite instruction est considérée comme étant anormale. Pour chaque mesure, donnée ou instruction, une anomalie peut être détectée si ladite mesure, donnée ou instruction est supérieure ou inférieure à la valeur seuil.

En cas de dépassement anormal de cette valeur seuil, l'étape d'arrêt d'urgence se déclenche alors pour arrêter le véhicule autonome.

Selon une caractéristique du procédé, l'étape de mesure est effectuée par au moins un capteur et/ou l'étape de génération d'instructions de commande est effectuée par au moins un générateur de données logicielles. Tel que cela a été mentionné précédemment, le capteur, c'est-à-dire le moyen de détection, peut effectuer les mesures puis les transmettre simultanément à un module de gestion de l'unité centrale et au module de sécurité de l'unité de sécurité qui est associé à ce module de gestion. Le générateur de données logicielles est quant à lui intégré à chacun des modules de gestion de l'unité centrale pour générer les instructions de commande sur la base des mesures transmises par les moyens de détection, ces instructions de commande étant par la suite transmises aussi bien aux actionneurs, via le cés échéant une compilation de données avec d'autres instructions de commande pour générer une instruction de commande globale aux actionneurs, qu'au module de sécurité correspondant au sein de l'unité de sécurité.

Selon une caractéristique du procédé, une hiérarchisation des mesures et/ou des instructions de commande et/ou des données reçues par un module de sécurité est mise en œuvre pour respectivement déterminer un ordre de priorité d'un traitement des mesures et/ou des instructions de commande et/ou des données. Cet ordre de priorité peut se faire par exemple selon un degré d'importance ou selon un ordre de gravité des potentielles anomalies résultant d'une mauvaise mesure ou d'une mauvaise instruction de commande. Selon le déroulement de l'étape de comparaison, l'ensemble des mesures, des données et/ou des instructions de commande peut être comparé en cascade selon l'ordre de priorité et par rapport à la valeur seuil qui leur est propre.

Selon une caractéristique du procédé, le traitement des mesures transmises par les moyens de détection est prioritaire au traitement des données et/ou des instructions de commande. Le traitement des mesures peut notamment être réalisé en priorité dans la mesure où il peut être mis en œuvre par le module de sécurité avec une réactivité plus grande, puisqu'il n'est pas nécessaire d'attendre de recevoir la donnée ou l'instruction de commande en provenance du module de gestion, et puisque la donnée ou l'instruction de commande générée par le module de gestion est elle-même impactée par la justesse de la mesure.

Selon une caractéristique du procédé, l'étape de comparaison est liée à au moins une règle heuristique. Autrement dit, si la règle heuristique n'est pas respectée, l'étape d'arrêt d'urgence est mise en œuvre. Une règle heuristique n'est pas respectée lorsque la mesure, la donnée ou l'instruction devient supérieure ou inférieure à la valeur seuil correspondante. Si la règle heuristique est respectée, la mesure suivante, la donnée suivante ou l'instruction de commande suivante, selon la hiérarchisation décrétée pour le traitement des informations par le module de sécurité, est à son tour comparée à sa valeur seuil, et ainsi de suite jusqu'à ce que toutes les mesures et/ou données et/ou instructions soient comparées et que toutes les règles heuristiques soient vérifiées.

Ci-après, on citera différents paramètres et leur(s) règle(s) heuristique(s) selon plusieurs exemples non exhaustifs. Un paramètre relatif à la mesure transmise par les moyens de détection peut être le nombre de satellites détectés par le véhicule autonome et la règle heuristique associée entraîne un arrêt d'urgence du véhicule si le nombre de satellites est inférieur à un seuil minimum.

Un autre paramètre peut être la qualité de réception satellite et la règle heuristique associée entraîne un arrêt d'urgence du véhicule si la qualité de réception satellite est inférieure à une valeur minimum.

Un autre paramètre peut être lié à un écart entre la localisation réelle du véhicule et sa localisation virtuelle détectée par satellite. La règle heuristique associée entraîne un arrêt d'urgence du véhicule si cet écart est supérieur à une valeur maximum.

Un autre paramètre peut être lié à la fréquence du radar du véhicule autonome. La règle heuristique associée entraîne un arrêt d'urgence du véhicule si cette fréquence est inférieure à une valeur minimum.

Ces exemples de paramètres peuvent être détectés par les moyens de détection.

Un autre paramètre peut être lié à un écart d'orientation et/ou de position du véhicule autonome par rapport à la détection satellite. Sa règle heuristique entraîne un arrêt d'urgence du véhicule si l'écart d'orientation et/ou de position du véhicule autonome est supérieure à une valeur maximum.

Un autre paramètre peut être lié à un écart de la vitesse du véhicule autonome par rapport à une vitesse référence ou une limitation de vitesse imposée sur la route. La règle heuristique associée entraîne un arrêt d'urgence du véhicule si l'orientation et/ou la position du véhicule autonome est supérieure à une valeur maximum.

Un autre paramètre peut être lié à un écart entre une trajectoire du véhicule autonome par rapport à une trajectoire référence. La règle heuristique associée entraîne un arrêt d'urgence du véhicule si cet écart est supérieur à une valeur maximum.

Selon une caractéristique du procédé, plusieurs paramètres avec leur propre règle heuristique associée sont spécifiquement liés à un unique module. Autrement dit, une caractéristique liée à un module de sécurité et à son module de gestion correspondant peut être contrôlée avec plusieurs règles heuristiques régissant cette seule caractéristique.

Selon une caractéristique du procédé, le module d'arrêt d'urgence maintient l'arrêt d'urgence tant que la règle heuristique n'est pas résolue. Si une tentative de redémarrage du véhicule autonome est mise en œuvre, la règle heuristique ayant provoquée l'arrêt d'urgence est de nouveau vérifiée. Si elle n'est toujours pas résolue, le véhicule autonome s'arrête de nouveau.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

[Fig.1] est une représentation schématique d'un système de gestion d'un véhicule autonome selon l'invention,
[Fig.2] est un logigramme d'un procédé de gestion dudit véhicule autonome mis en œuvre par le système de gestion selon l'invention,
[Fig.3] est un tableau de paramétrage pour le contrôle d'une première caractéristique du véhicule autonome par un module de sécurité du système de gestion selon l'invention,
[Fig.4] est un tableau de paramétrage pour le contrôle d'une deuxième caractéristique du véhicule autonome par un module de sécurité du système de gestion selon l'invention.

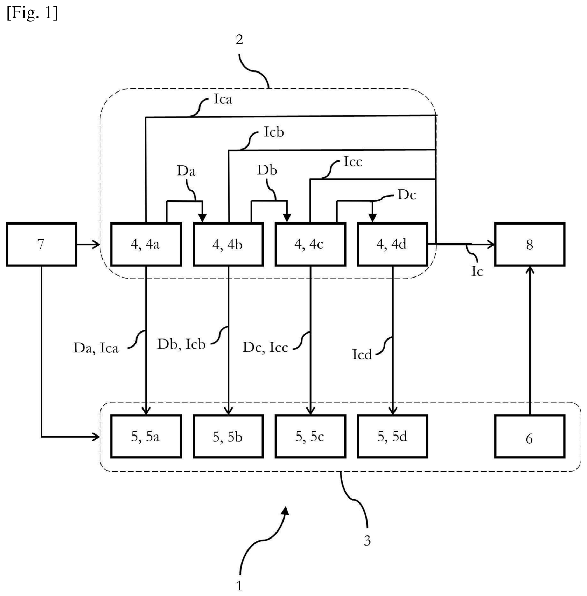

La [Fig.1] représente schématiquement un système de gestion 1 selon l'invention, configuré pour opérer au sein d'un véhicule autonome. Le système de gestion 1 est plus particulièrement configuré pour définir une commande de pilotage du véhicule autonome et pour s'assurer de la mise en œuvre et du suivi de cette commande de pilotage. En fonction du degré d'autonomie du véhicule sur lequel est appliqué le système de gestion, ce dernier peut être destiné à assurer une assistance au pilotage ou bien être destiné à assurer l'intégralité du pilotage du véhicule sans intervention humaine.

Le système de gestion 1 comprend une unité centrale 2 et une unité de sécurité 3, chacune d'entre elles comprenant une pluralité de modules. Ainsi, l'unité centrale 2 comprend une pluralité de modules de gestion 4 tandis que l'unité de sécurité 3 comprend une pluralité de modules de sécurité 5 ainsi qu'un module d'arrêt d'urgence 6.

Sur la [Fig.1], l'unité centrale 2 comprend quatre modules de gestion 4a, 4b, 4c, 4d tandis que l'unité de sécurité 3 comprend quatre modules de sécurité 5a, 5b, 5c, 5d. Il convient de noter que le nombre de modules de gestion 4 et de modules de sécurité 5 n'est pas fixe et peut dépendre du modèle du véhicule sur lequel le système de gestion est embarqué. Toutefois, tel que cela va être détaillé ci-après, le nombre de modules de gestion au sein de l'unité centrale 2 est égal au nombre de modules de sécurité 5 au sein de l'unité de sécurité 3.

Le système de gestion 1 comprend également des moyens de détection 7. Ces moyens de détection 7 peuvent par exemple être des capteurs configurés pour mesurer différents paramètres liés au véhicule autonome. Les mesures sont par la suite transmises à l'unité centrale 2 et à l'unité de sécurité 3.

Le système de gestion 1 comporte des actionneurs 8 dont la fonction est notamment de contrôler le déplacement du véhicule autonome, les actionneurs étant commandés par l'intermédiaire d'instructions de commande émanant de l'unité centrale 2. Les actionneurs 8 peuvent par exemple être l'accélérateur, les freins ou le volant du véhicule autonome.

L'unité centrale 2 est apte à traiter les mesures transmises par les moyens de détection 7 pour générer une instruction de commande globale à au moins un actionneur, cette instruction de commande globale Ic pouvant être la synthèse d'instructions de commande Ica, Icb, Icc générées par chacun des modules de gestion 4 pour cet actionneur en fonction des mesures et données d'entrée qui lui sont adressées. Le cas échéant, seul un des modules de gestion 4, ici un module de gestion de contrôle 4d, est configuré pour générer une instruction de commande et l'instruction de commande globale Ic correspond à cette seule instruction de commande.

Tel que cela est visible sur la [Fig.1], le système de gestion est configuré en cascade avec une disposition hiérarchisée des modules de gestion 4 au sein de l'unité centrale 2. Un module de gestion de rang n est destiné à recevoir le cas échéant une donnée Da, Db, Dc en provenance d'un module de gestion de rang inférieur n-1 pour générer en réponse une donnée à destination d'un module de gestion de rang supérieur n+1.

Dans l'exemple illustré, sans que celui-ci soit limitatif de l'invention pour ce qui est du nombre de modules ou de leur fonction, l'unité centrale 2 comporte quatre modules de gestion parmi lesquels un module de gestion de localisation 4a, un module de gestion de perception 4b, un module de gestion de navigation 4c et un module de gestion de contrôle 4d.

Le module de gestion de localisation 4a reçoit des mesures directement remontées des capteurs et est configuré sur cette base pour calculer des données décrivant le véhicule d'un point de vue plus générique. Il est ainsi configuré pour générer une donnée Da qui va être transmise au module de gestion de rang directement supérieur, ici le module de gestion de perception, et peut le cas échéant générer une instruction de commande Ica destinée à un ou plusieurs actionneurs du véhicule que l'unité générale va compiler.

Le module de gestion de perception 4b, module de rang supérieur par rapport au module de gestion de localisation 4a, récupère les données générées par le module de gestion de localisation et le cas échéant d'autres données et par exemple des paramètres en provenance de capteurs nécessaires pour qu'il puisse générer à son tour une donnée Db pour la transmettre à un module de gestion de rang supérieur, ici le module de gestion de navigation. Le cas échéant, comme précédemment, le module de gestion peut générer une instruction de commande Icb destinée à un ou plusieurs actionneurs du véhicule que l'unité générale va compiler.

Le module de gestion de navigation 4c, module de rang supérieur par rapport au module de gestion de perception 4b, récupère les données générées par le module de gestion de perception et le cas échéant d'autres données et par exemple des paramètres en provenance de capteurs nécessaires pour qu'il puisse générer à son tour une donnée Dc pour la transmettre à un module de gestion de rang supérieur, ici le module de gestion de contrôle. Le cas échéant, comme précédemment, le module de gestion peut générer une instruction de commande Icc destinée à un ou plusieurs actionneurs du véhicule que l'unité générale va compiler.

On comprend que le fonctionnement en cascade permet d'aboutir à une donnée générale apte à permettre le pilotage des actionneurs, la donnée générée par un module de gestion étant liée à une perspective technique de plus en plus large au fur et à mesure que les données sont considérées par les modules de gestion de rang n+1. On a ainsi dans la configuration du système selon l'invention un flux d'informations qui passe de module de gestion en module de gestion pour permettre à la fin à l'unité centrale d'agir de manière globale sur les actionneurs.

A titre d'exemple, une donnée Da générée par le module de gestion de localisation 4a peut être la vitesse du véhicule ou son orientation, un donnée Db générée ensuite par le module de gestion de perception 4b peut être la détection obstacle, le temps estimé avant une collision ou encore l'estimation de trajectoires, une donnée Dc générée ensuite par le module de gestion de navigation 4c peut être la définition de trajectoires cibles et c'est sur cette base que le module de gestion de contrôle 4d génère une instruction de commande Ic pour les actionneurs 8.

L'unité de sécurité 3 a pour fonction de détecter des anomalies dans l'instruction de commande globale générée par l'unité centrale 2 à destination des actionneurs 8, et selon l'invention, cette fonction de détection d'anomalies est réalisée distinctement par chacun des modules de sécurité sur l'instruction de commande réalisée par l'un des modules de gestion auquel ce module de sécurité est associé.

La particularité du système de gestion 1 selon l'invention est que chaque module de gestion 4 de l'unité centrale 2 est spécifiquement lié à l'un des modules de sécurité 5 de l'unité de sécurité 3. Par « spécifiquement lié » il faut comprendre qu'un module de gestion 4 et un module de sécurité 5 sont liés uniquement entre eux sans être lié à un quelconque autre module, l'ensemble des modules formant ainsi des paires de modules spécifiquement liés entre eux. Avantageusement, il y a donc autant de modules de gestion 4 qu'il y a de modules de sécurité 5. Il y a en revanche un module de plus dans l'unité de sécurité 3 que dans l'unité centrale 2, l'unité de sécurité 3 comprenant également le module d'arrêt d'urgence 6.

Un module de gestion 4 et le module de sécurité 5 correspondant sont liés à la gestion d'une caractéristique ou d'une catégorie de caractéristiques du véhicule autonome, par exemple la gestion de la localisation, de la perception de l'environnement ou du contrôle du véhicule autonome. Ainsi, la gestion du véhicule autonome est compartimentée, ce qui permet d'une part de mettre en œuvre, en cas d'anomalie détectée, une réponse du véhicule plus adaptée à ladite anomalie, et d'autre part de simplifier les modifications apportées au système de gestion 1, par exemple lors d'un ajout ou d'un retrait d'une fonctionnalité et de la paire de modules associés, qui peut ainsi se faire sans avoir à modifier l'ensemble du système de gestion 1.

Tel que cela est illustré sur la [Fig.1], les moyens de détection 7 sont aptes à communiquer les mesures effectuées à l'unité centrale 2 mais également directement à l'unité de sécurité 3. Plus particulièrement, les mesures sont transmises aux modules de gestion 4 et aux modules de sécurité 5. Au moins un module de gestion, le module de gestion de rang le plus bas dans l'organisation hiérarchisée des modules de gestion, reçoit les mesures qui sont spécifiques à la caractéristique qui lui est liée et peut traiter lesdites mesures pour en générer une donnée Da. Le cas échéant, une mesure peut être transmise à plusieurs modules de gestion 4 et plusieurs modules de sécurité 5 si ladite mesure est pertinente pour l'analyse de plusieurs caractéristiques liées à différents modules.

L'unité de sécurité 3 reçoit les mesures transmises par les moyens de détection 7 pour vérifier si l'information contenue dans ses mesures est fiable et qu'elle peut servir de base par la suite à la génération d'instructions de commande fiables, tandis que l'unité centrale 2 reçoit les mesures transmises par les moyens de détection 7 pour générer lesdites instructions de commande, sans vérification spécifique de la véracité de l'information reçue. Tel qu'illustré, sur la base d'une information initiale en provenance des moyens de détection 7, les modules de gestion génèrent de proche en proche des données Da, Db, Dc, qu'ils communiquent au module de gestion de rang supérieur pour que ce dernier puisse déterminer une donnée plus large pour le fonctionnement du véhicule.

Selon l'invention, les modules de gestion 4 peuvent également transmettre à leur module de sécurité 5 correspondant les instructions et/ou les données générées à partir des mesures et/ou des données reçues. Les modules de sécurité ont pour fonction de vérifier pour leur module de gestion correspondant l'instruction de commande Ica, Icb, Icc, et/ou la donnée Da, Db, Dc générée.

Les modules de sécurité peuvent ainsi entraîner un arrêt du véhicule s'ils ont détecté une anomalie dans les mesures directement transmises par les moyens de détection 7 ou dans les instructions et/ou données générées et transmises par les modules de gestion 4. Ainsi, avantageusement, les modules de sécurité 5 mettent en œuvre une double vérification, aussi bien logicielle pour la vérification de la justesse de l'instruction de commande basée sur des mesures données, que structurelle pour la vérification de la fiabilité des mesures envoyées par les moyens de détection. La configuration des modules de sécurité permet ainsi d'améliorer la capacité de détection d'anomalies du système de gestion 1.

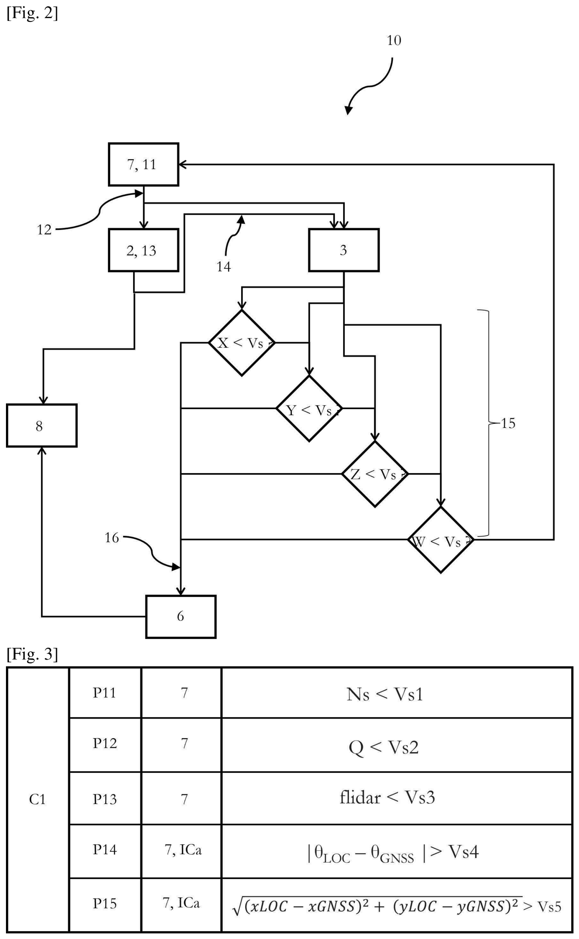

Afin d'assurer une détection d'anomalie efficace et facile à mettre en œuvre, et notamment à adapter au type de véhicule sur lequel le système de gestion est embarqué, un procédé de gestion 10, dont le logigramme est représenté en [Fig.2], est mis en œuvre par le système de gestion et notamment par chacun des modules de sécurité prévus dans le système de gestion.

Selon le procédé de gestion 10, celui-ci débute par une étape de mesure 11 par les moyens de détection 7. Comme cela a été décrit précédemment, les moyens de détection 7 peuvent être des capteurs aptes à relever des mesures pertinentes pour la suite du procédé de gestion 10.

Une fois l'étape de mesure 11 effectuée, les mesures sont transmises à l'unité centrale 2 et à l'unité de sécurité 3 au cours d'une étape de transmission des mesures 12. Ces dernières peuvent donc être analysées par les deux unités 2, 3. Plus particulièrement, les mesures d'un paramètre donné sont analysées par un module de gestion de l'unité centrale 2, pour en déduire une instruction de commande et/ou une donnée à faire suivre à un module de gestion de rang supérieur, et analysées par le module de sécurité correspondant de l'unité de sécurité 3 pour vérifier si les mesures sont fiables.

Chaque module de gestion de rang n de l'unité centrale 2 traite les mesures et/ou données reçues et génère en conséquence des instructions à destination d'actionneurs et/ou des données à destination d'un module de gestion de rang n+1 lors d'une étape de génération d'instructions 13, puis transmet ces instructions et/ou données à l'unité de sécurité 3 lors d'une étape de transmission des instructions 14. L'étape de génération d'instructions 13 peut être effectuée via un générateur de données logicielles.

Lors de l'étape de transmission des instructions 14, les instructions de commande Ica, Icb, Icc et/ou données Da, Db, Dc sont transmises tout aussi bien aux actionneurs 8 qu'aux modules de sécurité de l'unité de sécurité 3.

Les modules de sécurité de l'unité de sécurité 3 peuvent donc traiter à la fois les mesures reçues lors de l'étape de transmission des mesures 12 et les instructions et/ou données reçues lors de l'étape de transmission des instructions 14. Plus précisément, chaque traitement se fait entre le module de gestion et son module de sécurité correspondant, de manière individualisée tel que cela a été décrit précédemment. En fonction de la caractéristique analysée, le traitement peut se faire directement à partir des mesures relevées lors de l'étape de mesure 11 et/ou à partir des instructions et/ ou données générées lors de l'étape de génération d'instructions 13, en fonction de la caractéristique à traiter.

A partir de ces mesures, de ces données ou de ces instructions, une étape de comparaison 15 desdites mesures et/ou desdites données et/ou desdites instructions est mise en œuvre, par le module de sécurité correspondant à une fonction donnée, à partir d'une ou plusieurs règles heuristiques. Chaque règle heuristique consiste à comparer une mesure, une donnée et/ou une instruction de commande à des valeurs seuils Vs, ces dernières étant établies afin de détecter une anomalie lorsque la mesure, la donnée et/ou l'instruction dépasse la valeur seuil correspondante. Les valeurs seuils peuvent être un seuil limite maximal dont le dépassement est anormal ou un seuil limite minimal en deçà duquel il convient de ne pas descendre.

Ainsi en cas de valeur anormale, une anomalie est détectée. Dans cette situation, le procédé de gestion 10 se poursuit alors avec une étape d'arrêt d'urgence 16. Cette étape se fait via le module d'arrêt d'urgence 6 décrit précédemment, ce dernier étant apte à agir sur les actionneurs 8. Cette étape permet l'arrêt du véhicule autonome.

Lors de l'étape de comparaison 15, l'ensemble des mesures des données et des instructions reçues par le module de sécurité peut être traitée, selon un ordre de traitement défini et priorisé. Notamment, les mesures sont traitées en priorité par rapport aux instructions. Selon l'exemple illustré en [Fig.2], les valeurs X et Y sont traitées en priorité par rapport aux valeur Z et W. Les valeurs X et Y peuvent ainsi par exemple résulter de mesures, tandis que les valeurs Z et W peuvent résulter de données ou d'instructions. Par ailleurs, un ordre de priorité peut également être mis en œuvre au niveau des mesures, ou au niveau des données et des instructions.

Il est notable que ces règles heuristiques sont propres à un module de sécurité, uniquement associé à la surveillance du bon fonctionnement d'un module de gestion spécifique. Ce couple de modules est destiné à la réalisation d'instructions relatives à une caractéristique donnée du véhicule.

En d'autres termes, un ou plusieurs paramètres liés à une ou plusieurs règles heuristiques sont liées à une caractéristique donnée du véhicule, et cette dernière est liée à une paire de modules spécifiquement liés entre eux. La caractéristique peut par exemple être la localisation du véhicule, la perception de l'environnement extérieur au véhicule, la navigation du véhicule ou encore le contrôle du véhicule.

A titre d'exemples, sans que ceux-ci soient limitatifs de l'invention, on va décrite par la suite les opérations de sécurité réalisées par le module de sécurité appropriée pour une caractéristique relative à la localisation du véhicule, ainsi que les opérations de sécurité réalisées par le module de sécurité appropriée pour une caractéristique relative au contrôle du véhicule.

La [Fig.3] illustre plus particulièrement le paramétrage d'un module de sécurité 5a associé à un module de gestion 4a dédié à une première caractéristique C1 relative à la localisation du véhicule.

Cette première caractéristique C1 est contrôlée ici à travers cinq paramètres P11, P12,...P15, étant entendu que le nombre de paramètres et le libellé de ces paramètres sont ici donnés à titre d'exemple. Ces cinq paramètres sont hiérarchisés tel qu'évoqué précédemment, en référence au fait qu'ils impliquent le contrôle d'une mesure transmise par les moyens de détection ou bien le contrôle de la donnée logicielle aboutissant à une instruction de commande ou à une donnée à destination du module de gestion de rang supérieur. Ici, les trois premiers paramètres P11 à P13 sont relatifs uniquement à des mesures transmises par les moyens de détection et sont donc contrôlés avant les deux derniers paramètres P14 et P15, relatifs à la fois à des mesures transmises par les moyens de détection et au contenu de la donnée et/ou de l'instruction de commande générée par le module de gestion 4a correspondant à la première caractéristique C1 relative à la localisation du véhicule.

Le premier paramètre P11 contrôlé par le module de sécurité 5a pendant l'étape de comparaison 15 est un nombre de satellites Ns détectés par le véhicule autonome et la règle heuristique associée « Ns < Vs1 » entraîne un arrêt d'urgence du véhicule si le nombre de satellites Ns est inférieur à une valeur seuil Vs1 minimum.

Le deuxième paramètre P12 contrôlé par le module de sécurité 5a pendant l'étape de comparaison 15 est la qualité de réception satellite Q et la règle heuristique associée « Q < Vs2 » entraîne un arrêt d'urgence du véhicule si la qualité de réception satellite est inférieure à une valeur seuil Vs2 minimum.

Le troisième paramètre P13 contrôlé par le module de sécurité 5a pendant l'étape de comparaison 15 est la fréquence de fonctionnement flidar du moyen de détection, par exemple de type LIDAR, pour l'acronyme anglais de « LIght Detection And Ranging », du véhicule autonome. La règle heuristique associée « flidar < Vs3 » entraîne un arrêt d'urgence du véhicule si cette fréquence est inférieure à une valeur seuil Vs3 minimum.

Les quatrième et cinquième paramètres P14, P15 contrôlés par le module de sécurité 5a pendant l'étape de comparaison sont respectivement un écart d'orientation E1 et un écart de position E2 du véhicule autonome par rapport à la détection satellite. Les règles heuristiques associées « |θLOC - θGNSS |> Vs4 » et «

$$\sqrt{(xLOC\text{-}xGNSS)^2 + (yLOC\text{-}yGNSS)^2} > Vs5$$ » entraînent un arrêt d'urgence du véhicule si l'orientation et/ou la position du véhicule autonome est supérieure à une valeur seuil Vs4, Vs5 maximum.

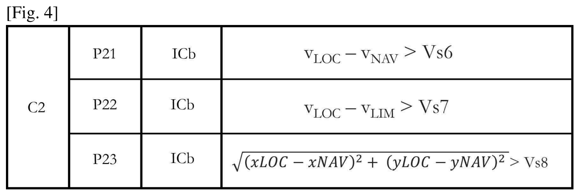

La [Fig.4] illustre plus particulièrement le paramétrage d'un module de sécurité 5b associé à un module de gestion 4b dédié à une deuxième caractéristique C2 relative au contrôle du véhicule.

Cette deuxième caractéristique C2 est contrôlée ici à travers trois paramètres P21, P22, P23, étant entendu que le nombre de paramètres et le libellé de ces paramètres sont ici donnés à titre d'exemple. Ces trois paramètres sont ici tous relatifs au contenu de la donnée générée par le module de gestion 4b correspondant à la deuxième caractéristique C2 relative au contrôle du véhicule de sorte que leur hiérarchisation est faite en fonction de l'impact qu'une anomalie peut avoir sur l'utilisateur du véhicule autonome.

Les premier et deuxième paramètres P21 contrôlés par le module de sécurité 5b pendant l'étape de comparaison 15 sont liés à un écart de la vitesse du véhicule autonome par rapport à une vitesse référence et par rapport à une limitation de vitesse imposée sur la route. Les règles heuristiques associées « VLoc - Vnav > Vs6 » et « VLoc - Vlim > Vs7 » entraînent un arrêt d'urgence du véhicule si l'écart entre la vitesse du véhicule et la vitesse considérée est supérieure à une valeur seuil Vs6, Vs7 maximum.

Le troisième paramètre P23 contrôlé par le module de sécurité 5b pendant l'étape de comparaison 15 est lié à un écart entre la position du véhicule autonome à un instant donné et une trajectoire référence. La règle heuristique associée

« $$\sqrt{(xLOC\text{-}xNAV)^2 + (yLOC\text{-}yNAV)^2} > Vs8$$ » entraîne un arrêt d'urgence du véhicule si cet écart est supérieur à une valeur seuil Vs maximum.

Si, au cours du procédé de gestion 10, après vérification de l'ensemble des paramètres, aucune anomalie n'est détectée, le procédé de gestion 10 est de nouveau mis en œuvre avec de nouvelles mesures par les moyens de détection 7. Le procédé de gestion 10 garantit ainsi une vérification constante du bon fonctionnement du véhicule autonome au cours du temps.

Si une anomalie est détectée et que l'étape d'arrêt d'urgence 16 est mise en œuvre, le véhicule autonome ne peut redémarrer tant que la règle heuristique ayant entraînée l'arrêt d'urgence du véhicule autonome n'a été résolue, c'est-à-dire tant que la valeur seuil Vs est dépassée.

Ainsi, le véhicule autonome est davantage sécurisé, apte à répondre de manière plus spécifique en fonction de la nature d'une anomalie survenant au niveau dudit véhicule autonome, et est simplifié au niveau de sa structure afin d'assurer un ajout ou un retrait de fonctions de manière plus aisée.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un système de gestion apte à surveiller une pluralité de caractéristiques liées à un véhicule autonome de manière spécifique. Des variantes non décrites ici pourraient être mises en œuvre sans sortir du contexte de l'invention, dès lors que, conformément à l'invention, elles comprennent un système de gestion conforme à l'invention.

**Revendications**

1. Système de gestion (1) pour véhicule autonome, comprenant :

   - au moins une unité centrale (2) comprenant une pluralité de modules de gestion (4) d'une caractéristique liée au véhicule autonome, chaque module de gestion (4) étant apte à traiter des mesures en provenance de moyens de détection (7), et/ou à traiter une donnée en provenance d'au moins un autre module de gestion, pour générer une instruction de commande à destination d'actionneurs (8) et/ou pour générer une donnée à destination d'au moins un autre module de gestion (4),
   - au moins une unité de sécurité (3) comprenant une pluralité de modules de sécurité (5), chacun étant spécifiquement lié à l'un des modules de gestion (4) de l'unité centrale (2) et étant configuré pour détecter une anomalie du module de gestion (4) correspondant, ainsi qu'un module d'arrêt d'urgence (6) assurant l'arrêt d'urgence du véhicule en cas d'anomalie détectée.

2. Système de gestion (1) selon la revendication 1, dans lequel chaque module de sécurité (5) est configuré pour recevoir les mesures et/ou les données reçues par le module de gestion (4) correspondant.

3. Système de gestion (1) selon la revendication 1 ou 2, dans lequel chaque module de sécurité (5) est configuré pour recevoir les instructions de commande et/ou les données générées par le module de gestion (4) correspondant.

4. Système de gestion (1) selon l'une quelconque des revendications précédentes, dans lequel le module d'arrêt d'urgence (6) est configuré pour communiquer avec chacun des modules de sécurité (5).

5. Procédé de gestion (10) d'un véhicule autonome, mis en œuvre par un système de gestion (1) selon l'une quelconque des revendications précédentes, comprenant :

    - une étape de mesure (11) d'au moins un paramètre par les moyens de détection (7) et/ou une étape de génération d'au moins une donnée par un module de gestion de rang n-1 de l'unité centrale (2),
    - une étape de transmission (12) des mesures et/ou des données générées par ledit module de gestion à un module de gestion de rang n de l'unité centrale (2) et au module de sécurité de l'unité de sécurité (3) qui est associé au module de gestion de rang n,
    - une étape de génération (13), par le module de gestion de rang n de l'unité centrale (2), d'instructions de commande à destination d'actionneurs et/ou de données à destination d'au moins un module de gestion de rang n+1 à partir de la mesure d'au moins un paramètre et/ou de l'au moins une donnée transmise,
    - une étape de transmission (14) des instructions de commande et/ou des données générées par le module de gestion de rang n de l'unité centrale (2) à destination du module de sécurité de l'unité de sécurité (3) associé au module de gestion de rang n,
    - une étape de comparaison (15), par le module de sécurité de l'unité de sécurité, des mesures et/ou des données transmises au module de gestion de rang n et/ou des instructions de commande et/ou des données générées par le module de gestion de rang n de l'unité centrale, à une valeur seuil (Vs),
    - une étape d'arrêt d'urgence (16) par le module d'arrêt d'urgence (6) en fonction du résultat de l'étape de comparaison (15).

6. Procédé de gestion (10) selon la revendication précédente, au cours duquel l'étape de mesure (11) est effectuée par au moins un capteur et/ou l'étape de génération d'instructions (13) est effectuée par au moins un générateur de données logicielles.

7. Procédé de gestion (10) selon la revendication 5 ou 6, au cours duquel une hiérarchisation des mesures et/ou des instructions de commande et/ou des données reçues par un module de sécurité est mise en œuvre pour respectivement déterminer un ordre de priorité d'un traitement des mesures et/ou des instructions de commande et/ ou des données.

8. Procédé de gestion (10) selon la revendication précédente, au cours duquel le traitement des mesures transmises par les moyens de détection est prioritaire au traitement des données et/ou des instructions de commande.

9. Procédé de gestion (10) selon l'une quelconque des revendications 5 à 8, au cours duquel l'étape de comparaison (15) est liée à au moins une règle heuristique.

10. Procédé de gestion (10) selon la revendication 9, au cours duquel le module d'arrêt d'urgence (6) maintient l'arrêt d'urgence tant que la règle heuristique n'est pas résolue.

[Fig. 1]

[Fig. 2]

[Fig. 3]

| C1 | P11 | 7 | $Ns < Vs1$ |
|---|---|---|---|
| | P12 | 7 | $Q < Vs2$ |
| | P13 | 7 | $flidar < Vs3$ |
| | P14 | 7, ICa | $\mid \theta_{LOC} - \theta_{GNSS} \mid > Vs4$ |
| | P15 | 7, ICa | $\sqrt{(xLOC - xGNSS)^2 + (yLOC - yGNSS)^2} > Vs5$ |

[Fig. 4]

| | | | |
|---|---|---|---|
| C2 | P21 | ICb | $v_{LOC} - v_{NAV} > Vs6$ |
| | P22 | ICb | $v_{LOC} - v_{LIM} > Vs7$ |
| | P23 | ICb | $\sqrt{(xLOC - xNAV)^2 + (yLOC - yNAV)^2} > Vs8$ |

Europäisches Patentamt

European Patent Office

Office européen des brevets

## RAPPORT DE RECHERCHE EUROPEENNE

Numéro de la demande

EP 25 21 7798

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/283768 A1 (DAS ABHASH [DE]) 19 septembre 2019 (2019-09-19) * alinéas [0014], [0045] - [0047], [0050] - [0054]; figures * ----- | 1-10 | INV. B60W50/02 B60W50/04 G06F11/30 |
| A | EP 4 005 890 A1 (MAZDA MOTOR [JP]) 1 juin 2022 (2022-06-01) * alinéas [0056], [0057], [0062]; figures 3-5 * ----- | 1-10 | |
| A | DE 10 2020 121244 A1 (BAYERISCHE MOTOREN WERKE AG [DE]) 17 février 2022 (2022-02-17) * alinéas [0008], [0026] - [0028] * ----- | 1-10 | |
| A | US 2019/009797 A1 (LIU RONGHONG [CN] ET AL) 10 janvier 2019 (2019-01-10) * alinéas [0037] - [0041], [0047] - [0057] * ----- | 1-10 | |

DOMAINES TECHNIQUES RECHERCHES (IPC)

B60W
G06F

Le présent rapport a été établi pour toutes les revendications

| Lieu de la recherche | Date d'achèvement de la recherche | Examinateur |
|---|---|---|
| Munich | 12 février 2026 | Nielles, Daniel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 21 7798

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-02-2026

| Document brevet cité au rapport de recherche | Date de publication | Membre(s) de la famille de brevet(s) | Date de publication |
|---|---|---|---|
| US 2019283768 A1 | 19-09-2019 | CN 110271559 A<br>DE 102018002156 A1<br>US 2019283768 A1 | 24-09-2019<br>19-09-2019<br>19-09-2019 |
| EP 4005890 A1 | 01-06-2022 | CN 114174140 A<br>EP 4005890 A1<br>JP 7342495 B2<br>JP 2021020647 A<br>US 2022204001 A1<br>WO 2021020286 A1 | 11-03-2022<br>01-06-2022<br>12-09-2023<br>18-02-2021<br>30-06-2022<br>04-02-2021 |
| DE 102020121244 A1 | 17-02-2022 | AUCUN | |
| US 2019009797 A1 | 10-01-2019 | CN 109229102 A<br>US 2019009797 A1 | 18-01-2019<br>10-01-2019 |

Pour tout renseignement concernant cette annexe : voir Journal Officiel de l'Office européen des brevets, No.12/82